# DEMANDE DE BREVET EUROPEEN

(11) **EP 3 461 135 A1**
(43) Date de publication de la demande: **27.03.2019**
(21) Numéro de dépôt: 18192510.8
(22) Date de dépôt: 04.09.2018
(51) Int. Cl.: H04N 21/262, H04L 29/06, H04N 21/432, H04N 21/436, H04N 21/482, H04N 21/654

(54) **PROCÉDÉ DE GESTION DU DROIT D'ACCÈS À UN CONTENU NUMÉRIQUE**

(30) Priorité: 22.09.2017 FR 1758786
(71) Demandeur: ORANGE SA, 75015 Paris (FR)
(72) Inventeur: CONAN, M. Martin, 92326 Châtillon (FR); LEDUBY, M. Jean-Bernard, 92326 Châtillon (FR)

(57) **Abrégé**

L'invention se rapporte à un procédé de gestion du déport de la restitution d'un contenu sur un dispositif de déport (CL) apte à être commandé par plusieurs dispositifs de commande. Le procédé comprend
a. une étape de restitution d'un premier contenu commandé par un premier dispositif de commande (MOB1);
b. une étape de réception, au cours de la restitution, d'une demande de déport d'un deuxième contenu issue d'un deuxième dispositif de commande (MOB2),
c. une étape de transmission à destination du deuxième dispositif de commande d'une information représentative d'une durée d'attente pour le déport du deuxième contenu.

## Description

### Domaine technique

L'invention se rapporte à un procédé de gestion de l'utilisation d'un dispositif de déport par plusieurs dispositifs de commande. Le dispositif de déport visé s'intercale entre un dispositif de commande, à l'origine d'une demande d'accès à un contenu, et un dispositif de restitution ; le dispositif de déport a pour fonction de déporter la restitution d'un contenu sur un dispositif autre que celui à l'origine de la demande d'accès. Ce dispositif de déport a entre autres pour fonction l'accès au contenu et la fourniture du contenu au dispositif de restitution.

Le dispositif de déport peut prendre la forme d'une clé électronique (en anglais, dongle) connectée au dispositif de restitution et dotée d'une fonction de communication, par exemple sans fil de type WiFi, pour pouvoir se connecter à un réseau, par exemple un réseau local.

Le dispositif de déport et de restitution peuvent former un seul dispositif.

Le dispositif de commande visé ci-dessus sera, dans les exemples décrits ci-dessous, un dispositif mobile tel qu'un Smartphone ou une tablette numérique.

### Etat de la technique

Avec le développement des réseaux et des dispositifs mobiles, il est aujourd'hui possible de restituer des contenus multimédia numériques (vidéo, audio, etc.) sur un dispositif mobile d'un utilisateur, par exemple un smartphone ou une tablette numérique.

Cependant, dans un certain nombre de situations, et notamment lorsque l'utilisateur du dispositif mobile se trouve dans un réseau local, il lui est plus agréable de restituer le contenu multimédia, par exemple un film, sur un poste de télévision ou sur un autre terminal du réseau local, par exemple un ordinateur, disposant d'un plus grand écran que le dispositif mobile. Par « restituer », on entend ici la mise à disposition du contenu pour l'utilisateur : visualisation, affichage, restitution sonore, etc.

On rappelle ici qu'un réseau local, aussi appelé réseau domestique, est un réseau informatique qui relie ensemble, avec ou sans fils, des terminaux (ordinateurs, périphériques d'impression, de restitution, de stockage, etc.). Un réseau domestique comporte généralement un équipement routeur, aussi communément appelé passerelle domestique, ou passerelle de service, élément intermédiaire assurant la redirection, ou routage, des paquets de données entre les différents terminaux et les réseaux qui lui sont connectés. Un tel réseau domestique connecte souvent les différents terminaux en utilisant la technologie WiFi. On rappelle ici que l'appellation Wifi (pour « Wireless Fidelity ») rassemble des technologies de transmission sans fil permettant de créer des réseaux informatiques sans fil basés sur les normes de la famille IEEE 802.11.

L'écran du dispositif mobile étant souvent de taille réduite, et les hauts parleurs de qualité médiocre, il n'est pas agréable d'y restituer un contenu de type multimédia. De plus, il est malaisé de restituer de tels contenus sur l'écran d'un dispositif mobile tout en l'utilisant à d'autres fonctions, comme par exemple la gestion des appels téléphoniques, des messages textuels, etc.

Il est donc intéressant, à plusieurs points de vue, de déporter la restitution du contenu multimédia sur un autre dispositif dit dispositif de déport.

A cet effet sont apparus récemment des produits qui permettent de restituer des contenus multimédia sur un PC (ordinateur personnel) ou un TV (téléviseur) tout en déchargeant le dispositif mobile des tâches de décodage, affichage, restitution sonore, etc., inhérentes à la restitution d'un contenu numérique.

Dans cette catégorie, il existe des dispositifs aptes à restituer en temps réel des contenus numériques proposés sous formes de flux, se présentant sous forme d'une clé électronique se branchant sur un port multimédia de type HDMI (de l'anglais High-Definition Multimedia Interface, une interface électrique et logique permettant le transfert de données numériques multimédia non compressées en haute définition) d'un téléviseur. Le contenu multimédia issu d'une application, comme par exemple une application de téléchargement progressif sur le réseau Internet étendu (WAN), comme par exemple YouTube©, est sélectionné par l'utilisateur sur un premier terminal connecté au réseau local (smartphone, tablette, ordinateur, etc.) et restitué sur le téléviseur via le dispositif de déport.

Dans cette configuration, les principales étapes au niveau du dispositif de déport sont les suivantes, en supposant que l'appairage a été réalisé :
- ouverture d'un canal de communication point à point entre le dispositif portable et le dispositif de déport ;
- réception par le dispositif de déport d'un identifiant d'un contenu numérique à restituer ;
- accès, par le dispositif de déport, au contenu identifié sur le serveur de contenus.

Un problème est que plusieurs utilisateurs peuvent souhaiter utiliser un même dispositif de déport simultanément. Un déport de la restitution peut donc recevoir plusieurs demandes de déport ; en particulier, le dispositif de déport peut recevoir une demande de déport depuis un premier dispositif de commande alors qu'une restitution sur le dispositif de restitution est déjà en cours en liaison avec un deuxième dispositif de commande.

Une solution consiste pour le dispositif de déport à ne pas prendre en compte la demande de déport du deuxième dispositif de commande. Cette demande peut être ignorée, ou faire l'objet d'un message notifiant une impossibilité de réaliser un déport. Cette solution n'offre pas une qualité de service optimale car l'utilisateur du deuxième dispositif de commande reçoit un refus de déport ; ce refus sans suite n'encourage pas à utiliser la fonction de déport.

L'invention vient améliorer la situation.

### L'invention

Selon un premier aspect fonctionnel, l'invention a trait à un procédé de gestion du déport de la restitution d'un contenu, sur un dispositif de déport apte à être commandé par plusieurs dispositifs de commande, caractérisé en ce qu'il comprend
a. une étape de déport de la restitution d'un premier contenu commandé par un premier dispositif de commande ;
b. une étape de réception, au cours de la restitution, d'une demande de déport d'un deuxième contenu issue d'un deuxième dispositif de commande ;
c. une étape de transmission d'une information à destination du deuxième dispositif de commande, l'information étant représentative d'une durée d'attente pour le déport du deuxième contenu.

L'invention propose donc, lorsque le dispositif de déport est déjà en cours de déport de contenu, d'informer le demandeur d'un déport possible en fournissant une durée d'attente pour la réalisation du déport. L'utilisateur du dispositif de commande est donc informé que le déport est possible à l'issue d'une certaine durée.

Selon un premier mode de mise en oeuvre particulier de l'invention, une interruption, par le premier dispositif de commande, du déport de la restitution du premier contenu au cours de sa restitution déclenche le déport de la restitution du deuxième contenu. De cette manière, le deuxième contenu est restitué automatiquement sans que le dispositif de commande ne requiert une nouvelle fois la restitution du contenu.

Une interruption peut avoir plusieurs origines ; elle peut être demandée par un utilisateur souhaitant arrêter la restitution ; elle peut faire suite à la restitution du contenu dans son intégralité, etc.

Selon une variante de ce premier mode, le déclenchement du déport de la restitution du deuxième contenu est temporisé. En d'autres mots, la restitution du deuxième contenu est précédée d'une durée de temporisation. Idéalement, cette temporisation est calculée de telle manière à prendre en compte le temps nécessaire à un utilisateur de se déplacer jusqu'au dispositif de déport, sous-entendu le dispositif de restitution. La distance séparant le dispositif de commande, ou tout autre dispositif pouvant servant à localiser l'utilisateur, peut être calculée de manière à évaluer le temps de déplacement nécessaire pour se déplacer jusqu'au dispositif de déport.

Selon un deuxième mode de mise en oeuvre particulier de l'invention, qui pourra être mis en oeuvre alternativement ou cumulativement avec le précédent, lorsque le premier contenu et le deuxième contenu sont les mêmes, l'information indique en outre que le contenu demandé est déjà en cours de restitution. De cette manière, l'utilisateur ayant requis le déport peut soit attendre l'expiration de la durée d'attente ou soit se présenter sans attendre devant le dispositif de restitution car il sait que le contenu restitué est le contenu commandé ; ce dernier cas peut être intéressant lorsque le contenu commandé est une émission pouvant être regardée en cours de diffusion, par exemple une programme de télévisé de sport, par exemple un match de football ou autres.

Selon encore un troisième mode de mise en oeuvre particulier de l'invention, qui pourra être mis en oeuvre alternativement ou cumulativement, lorsque plusieurs demandes de déport sont reçues, une liste d'attente d'identifiants de dispositifs de commande est créée. En effet, plusieurs dispositifs de commande peuvent requérir un accès pendant la restitution du deuxième contenu ; cette variante permet de mettre en attente les différents dispositifs de commande concernés ; de préférence la file d'attente respecte l'ordre d'arrivée des commandes d'accès.

Selon une variante de ce troisième mode, aux identifiants de dispositif de commande correspondent des durées d'attente. De cette manière, un utilisateur d'un dispositif de commande, de la liste établie, a connaissance des dispositifs de commande de la liste et des durées d'attente respectives.

Selon encore un quatrième mode de mise en oeuvre particulier de l'invention, qui pourra être mis en oeuvre alternativement ou cumulativement, l'information est complétée par une demande de validation ; le dispositif de commande n'étant ajouté à la liste d'attente seulement après validation. En d'autres mots, lorsque la demande est validée, une réservation de déport est faite pour le dispositif de commande ayant demandé la restitution du deuxième contenu. Ce mode permet de n'inclure dans la liste d'attente que les dispositifs de commande ayant confirmé le souhait de déport. Si une validation n'est pas faite pour un dispositif de commande, ce dernier n'est pas ajouté à la liste d'attente.

Selon une variante de ce quatrième mode, la réservation faite est communiquée, par exemple sur demande, aux autres dispositifs de commande et/ou au dispositif de déport. De cette manière, l'utilisateur visualisant le premier contenu est prévenu que suite à la restitution du premier contenu, et éventuellement pour une durée donnée, le premier dispositif de commande ne pourra pas utiliser le dispositif de déport et que seul le deuxième dispositif de commande pourra commander le dispositif de déport pendant la période donnée.

Selon un premier aspect matériel, l'invention se rapporte à un dispositif de déport apte à accéder à un contenu stocké sur un serveur de contenus, le déport de la restitution d'un contenu sur un dispositif de déport étant apte à être commandé par plusieurs dispositifs de commande, caractérisé en ce qu'il comprend
a. un module de déport de la restitution d'un premier contenu commandé par un premier dispositif de commande ;
b. un module de réception, au cours de la restitution, d'une demande de déport d'un deuxième contenu issue d'un deuxième dispositif de commande,
c. un module de transmission apte à transmettre à destination du deuxième dispositif de commande une information représentative d'une durée d'attente pour le déport du deuxième contenu.

Selon un deuxième aspect matériel, l'invention a trait à un programme d'ordinateur apte à être mis en oeuvre sur un dispositif, tel que défini ci-dessus, le programme comprenant des instructions de code qui, lorsqu'il est exécuté par un processeur, réalise les étapes du procédé définies ci-dessus.

La nature des programmes visés ci-dessus est quelconque. Ils peuvent être téléchargés depuis un réseau de communication et/ou enregistrés sur un support lisible par ordinateur.

L'invention sera mieux comprise à la lecture de la description qui suit, donnée à titre d'exemple et faite en référence aux dessins annexés sur lesquels :
La figure 1 représente un système informatique sur lequel est illustré un exemple de réalisation de l'invention.
La figure 2 représente les circuits d'un dispositif mobile et d'un dispositif de déport.
La figure 3 est un chronogramme illustrant un mode de réalisation du procédé de l'invention.
Les figures 4 et 5 sont des chronogrammes illustrant une variante du mode de réalisation décrit en référence à la figure 3, respectivement.

### Description détaillée d'un exemple de réalisation illustrant l'invention

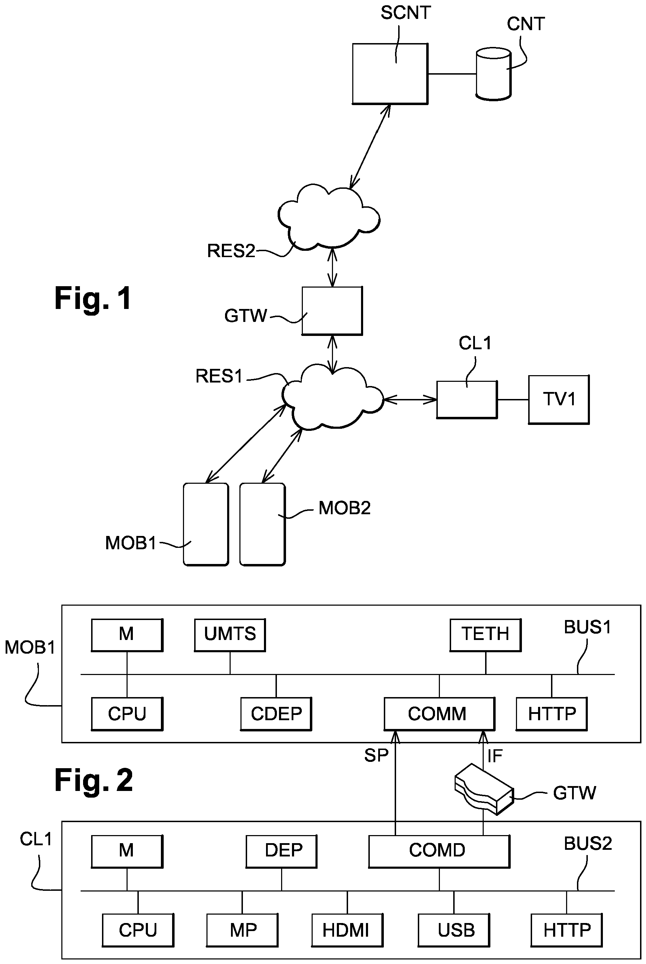

La figure 1 représente un système SYS comprenant des dispositifs de commande MOB1 et MOB2, illustrés au moyen de deux dispositifs mobiles à savoir des smartphone ; le nombre de dispositifs de commande est indifférent, un seul dispositif de commande pourrait être suffisant pour la mise en oeuvre de l'invention.

Le système comprend un dispositif de déport CL qui permet notamment l'accès à des contenus de manière à être restitués sur un dispositif de restitution TV.

Le système comprend également un serveur de contenus SRV apte à délivrer des contenus sur requête.

Comme expliqué dans le préambule de la demande, dans notre exemple, un dispositif de déport prend la forme d'une clé électronique (en anglais, dongle) connectée au dispositif de restitution TV et dotée d'une fonction de communication, par exemple sans fil de type Wi-Fi, pour pouvoir se connecter à un réseau de communication par exemple à un réseau local RES1 géré par une passerelle domestique GTW. Le dispositif de déport peut aussi être un décodeur de télévision numérique.

Le serveur SRV peut communiquer avec la passerelle GTW via un second réseau RES2. Dans notre exemple, ce second réseau est un réseau internet étendu (WAN, pour Wide Area Network, par opposition à un réseau local de type LAN - Local Area Network).

Le serveur SRV peut communiquer avec la passerelle GTW via ce second réseau RES2.

L'invention ne se limite bien évidemment pas à cette configuration. Par exemple, les dispositifs mobiles et la clé CL pourrait très bien accéder au serveur de contenus sans l'aide d'une passerelle ; Par exemple, les dispositifs mobiles et le dispositif de déport pourraient communiquer via un réseau mobile.

Dans notre exemple, les dispositifs mobiles et de déport sont aptes à établir des connexions avec la passerelle de service GTW reliée au second réseau RES2.

Le premier réseau RES1 est par exemple un réseau local IP (pour Internet Protocol, désignation du protocole de base pour les réseaux de type Internet et par extension, nom du réseau lui-même) et le second réseau est par exemple de type ADSL (de l'anglais Asymmetric Digital Subscriber Line).

Le serveur de contenus SRV héberge notamment des contenus pour mise à disposition à des dispositifs en particulier à ceux du réseau local RES1. L'exemple choisi concerne un serveur de contenus ; cependant ce serveur peut-être éclaté en plusieurs équipements, par exemple, les contenus peuvent être stockés dans une base de données distincte du serveur.

La passerelle de service GTW comporte une fonction de communication Wi-Fi, ou point d'accès (en anglais : AP, pour Access Point), qui lui permet de communiquer sans fil avec les dispositifs du réseau local. Ce point d'accès inclut un module radio bidirectionnel pour émettre ou recevoir les signaux dans le réseau local.

Un dispositif mobile MOB1/MOB2 est par exemple un ordinateur personnel (PC), un Smartphone (téléphone mobile intelligent), un PDA (« Personnal Digital Assistant ») une tablette numérique, ou encore un ordinateur portable, qui peut être ou non connecté à un réseau mobile (non représenté).

Un dispositif de restitution est par exemple un téléviseur TV.

Dans notre exemple, à un dispositif de déport correspond un dispositif de restitution. Bien évidemment, l'invention pourrait être mise en oeuvre avec un dispositif de déport associé à plusieurs dispositifs de restitution. Aussi, un dispositif de déport et un dispositif de restitution pourrait constituer un même équipement, par exemple, une télévision connectée incluant un dispositif de déport.

Une application s'exécutant sur le dispositif mobile MOB1/MOB2, dans notre exemple une application TV de contenus dits « live », c'est à dire de type « chaîne de télévision », ou à la demande, permet à l'utilisateur de sélectionner un contenu multimédia destiné à être rendu sur un téléviseur.

Le téléviseur TV est associé au dispositif de déport, connecté dans notre exemple sur un port vidéo HDMI du téléviseur et se présentant sous la forme d'une clé électronique (en anglais, « dongle »).

Suite à une sélection d'une fonction spécifique sur un dispositif mobile (par exemple une touche sélectionnable par pression dans le cas d'un écran tactile), le contenu multimédia est dirigé vers la clé et peut être joué sur le téléviseur TV; en d'autres mots la restitution du contenu est déportée sur le téléviseur TV. La clé électronique CL peut alors se connecter elle-même au serveur de contenus SCN du réseau WAN RES sur lequel elle récupère directement les contenus, éventuellement avec une qualité ou une résolution plus élevée que celle, initiale, du mobile, et dans notre exemple sans passer par le dispositif mobile.

On verra dans notre exemple, qu'un contenu est téléchargé depuis le serveur de contenus SRV à destination du dispositif de déport en passant par la passerelle de service GTW.

Notons ici que le déport du contenu présente plusieurs avantages :
- Le dispositif mobile peut être déchargé d'une tâche très consommatrice en ressources (décodage, affichage de la vidéo, etc.) ce qui lui permet de rendre d'autres fonctions pour l'utilisateur dans le même temps (e.g. visualisation d'un courrier, traitement d'un texto, etc.) ;
- la qualité et/ou la résolution du contenu multimédia peuvent être plus élevées sur le TV que sur le dispositif mobile, améliorant ainsi le confort pour l'utilisateur ;
- Le mobile peut servir de télécommande pour des fonctions de base relatives au contenu, comme par exemple l'arrêt de la restitution (« pause »), la reprise (« play »), le contrôle du volume (silence « mute », augmentation du volume « vol+ », diminution du volume « vol- »), etc.

On suppose que, lors d'une étape préalable (non représentée), les deux dispositifs, dispositifs mobile et de déport, se sont tous deux connectés au réseau local, c'est-à-dire à la passerelle de service GTW du réseau local. Dans notre exemple, une fois que les deux équipements sont connectés au réseau via la passerelle de service, ils établissent une communication. A cette fin, le dispositif mobile concerné procède tout d'abord à une découverte (D) de la présence sur le réseau d'un ou plusieurs périphériques de ce type. Cette étape de découverte correspond à une opération bien connue de l'homme du métier, qui peut être mise en oeuvre sous forme d'une requête conforme à un protocole de réseau local, par exemple la norme UPnP. On rappelle que la norme UPnP a pour but de permettre à des terminaux de se connecter aisément et de communiquer simplement au sein d'un réseau local. Elle constitue un ensemble de protocoles de communication basés sur le protocole IP et promulgué par le forum de normalisation UPnP (« UPnP Forum »). Pour contrôler les terminaux du réseau, UPnP utilise des points de contrôle (en anglais : Control Points, en abrégé CP). Un point de contrôle émet classiquement vers les différents terminaux du réseau des messages dits de découverte (*MSEARCH*) afin de récupérer en retour une description des terminaux correspondant à la requête. Ces messages de découverte sont émis le plus souvent en mode de communication point vers multipoint, mode aussi appelé multicast, du point de contrôle vers les terminaux. Dans notre exemple, un équipement terminal compatible avec la norme UPnP répond à ces messages de requête, et émet de surcroît, à fréquence régulière, des messages de présence (*ALIVE*) pour signifier qu'il est actif et connecté sur le réseau. Le point de contrôle du réseau local, qui est situé ici sur le dispositif mobile émet en mode multicast des messages de recherche (SEARCH) d'équipements d'un type donné, ici des clés électroniques de déport.

La clé concernée répond à la requête en découverte. Le dispositif mobile concerné choisit éventuellement une clé (et donc un téléviseur ou PC associé) parmi celles qui sont découvertes.

Un canal de communication (« WebSocket » - WS) est établi entre le dispositif mobile et la clé électronique afin d'échanger des commandes et/ou des données. Dans notre exemple, Le protocole *Websocket* permet d'assurer des communications bidirectionnelles entre un client et un serveur sur un réseau utilisant le protocole HTTP (de l'anglais Hyper Text Transport Protocol), un protocole de communication client-serveur développé pour les réseaux Internet et en particulier le Web. Par extension, WebSocket est un standard désignant à la fois un protocole réseau et une interface de programmation qui peut être utilisée par une application sur n'importe quel client et serveur Web. Le protocole a été normalisé par l'organisme IETF (Internet Engineering Task Force) dans sa spécification RFC 6455 (de référence « IETF Request for Comments : 6455 ») et l'interface de programmation correspondante par l'organisme W3C (de référence : *The Web Sockets API ; W3C Candidate Recommendation 20 September 2012*)*.*

Par la suite, lorsque l'utilisateur sélectionne un contenu (C) et appuie sur la touche de redirection par exemple sur un écran tactile du dispositif mobile, l'application du dispositif mobile requiert à la clé électronique de lancer l'application de déport de la restitution du contenu C repéré par son identifiant (C_ID) ; l'identifiant est alors transformé en URL, par exemple,
http://www.monserveur.com/C_ID

Puis la clé électronique accède au un serveur de contenus SRV afin de récupérer le contenu numérique C_ID par exemple en mode Streaming, grâce à cette URL. Le mode *Streaming* correspond par définition à un téléchargement continu de contenus multimédia. Le terminal client (ici, la clé électronique) effectue une requête en téléchargeant, dans une première étape, un document décrivant les paramètres d'accès au service via le protocole HTTP, puis accède au contenu sur le serveur de contenus SRV, le transmet au dispositif de restitution TV et le service démarre effectivement, c'est-à-dire que le dispositif d'affichage TV peut recevoir et afficher le contenu C.

Pendant le téléchargement du contenu, des commandes (CM) peuvent être émises vers la clé électronique (*pause, jeu, avance rapide,* etc.) et des messages de statut peuvent être reçus en provenance de la clé électronique (métadonnées, état du dispositif de déport, etc.) vers le dispositif mobile à l'origine des commandes.

La figure 2 représente une architecture matérielle d'un dispositif de déport connecté à un dispositif mobile du réseau local.

Le dispositif mobile MOB1 ou MOB2 comprend, classiquement, des mémoires M articulées autour d'un processeur CPU. Les mémoires peuvent être de type ROM (de l'anglais Read Only Memory) ou RAM (de l'anglais Random Access Memory), amovibles ou fixes, etc. Il communique avec le réseau local RES1 via le module de communication (COMM) qui lui permet de se connecter avec fils (via un câble Ethernet) ou sans fils (via un canal radio de type WiFI, Bluetooth, Zigbee, etc.) à la passerelle GTW ou à un autre dispositif du réseau local. Comme décrit auparavant, dans notre exemple, un canal de communication point à point « ad-hoc » est utilisé pour une phase initiale d'établissement de la session entre un dispositif mobile et un dispositif de déport. Ce canal peut être de type WIFi Direct, Bluetooth, etc. Puis, selon un mode de réalisation de l'invention, les deux dispositifs dialoguent en mode infrastructure via la passerelle GTW.

Selon un autre mode de réalisation de l'invention, le dispositif mobile peut servir de passerelle en mode « tethering » et les deux dispositifs dialoguent en mode infrastructure IF sans la passerelle de service. Un dispositif mobile (MOB1 ou MOB2) comprend à cet effet un mode de point d'accès ou tethering (TETH), qui lui permet de se transformer en passerelle, pour communiquer avec le deuxième réseau RES2 qui peut être dans ce cas confondu avec le réseau IP mobile.

Dans notre exemple, le dispositif mobile comprend encore un module radio-mobile (par exemple, UMTS) qui lui permet de dialoguer avec un troisième réseau dit réseau mobile du type réseau UMTS. Il comporte enfin une application (CDEP) chargée du contrôle du déport, notamment de la communication avec le dispositif de déport. Le module CDEP, qui peut être logiciel et/ou matériel, est notamment capable d'effectuer les actions suivantes : choix d'un dispositif de déport (parmi plusieurs), demande d'établissement d'un canal de communication point à point avec ce dispositif pour transmission des identifiants du réseau local, récupération et mémorisation de l'identification du dispositif de déport, sélection d'un contenu et transmission d'un identifiant de ce contenu au dispositif de déport, contrôle de la restitution du contenu, etc.

Une partie de la mémoire MEM est reliée au point d'accès Wi-Fi et stocke, entre autres, les paramètres d'identification des passerelles domestiques auxquelles peut accéder le dispositif mobile, les paramètres d'identification et d'association des équipements domestiques au point d'accès lorsque le dispositif mobile est en mode « routeur » (tethering) (table d'identifiants comprenant les identifiant uniques des terminaux domestiques qui ont déjà été autorisés à accéder au réseau domestique via le point d'accès, éléments de routage, etc.), les paramètres d'identification des dispositifs de déport du réseau local (noms, caractéristiques, etc.).

Le dispositif de déport comporte aussi un module de communication de type HTTP pour assurer les communications de type HTTP, par exemple de type Websocket (WS) ; on notera qu'une communication de type WS est possible sur un lien Bluetooth.

Tous les modules communiquent classiquement entre eux via un bus de données BUS1.

Dans notre exemple, le dispositif de déport comprend aussi des mémoires M articulées autour d'un processeur CPU. Les mémoires peuvent être de type ROM, RAM, ou autres. Une partie de la mémoire M stocke, entre autres, les paramètres d'identification des passerelles domestiques auxquelles peut accéder le dispositif de déport et l'identification du dispositif de déport (par exemple, « dongle_numéro_36 », ou « clé#2 »). Il communique avec le réseau local RES1 et le dispositif mobile via le module de communication (COMD) qui lui permet notamment de se connecter sans fils (WiFi) à la passerelle de service GTW en mode infrastructure (via la liaison IF) ou directement au dispositif mobile (liaison SP) en mode « WiFi direct » ou Bluetooth. Dans notre exemple, il est alimenté via une interface série de type USB. Il comporte aussi :
- une application (DEP) chargé de la communication avec un dispositif mobile et du déport du contenu. Ce module est notamment capable d'établir une communication, de préférence privée, avec le dispositif mobile via le module de communication COMD, d'accepter une requête pour aller chercher en streaming un contenu repéré par son identifiant C_ID sur le réseau à la place du dispositif mobile, de recevoir des commandes de contrôle de la restitution de la part du dispositif mobile agissant comme une télécommande, de lui transmettre des informations d'identification, d'état, etc.
- un « media player » (MP) capable de restituer (recevoir, décoder, préparer) les flux en mode de streaming et de les délivrer au dispositif de restitution (TV) ; le « media player » comporte entre autres un ensemble de dispositif de déports (audio, vidéo, etc.) aptes à décoder les contenus multimédia, ainsi qu'une interface de communication avec le dispositif mobile apte à interpréter les ordres en provenance de celui-ci (pause, retour arrière, contrôle du volume, etc.)

- un module d'interface avec le dispositif de restitution (HDMI) capable de s'interfacer physiquement et logiquement avec le téléviseur pour lui transmettre le contenu multimédia (audio et vidéo) décodé.
- un module de communication de type HTTP.

Tous les modules communiquent classiquement entre eux via un bus de données BUS2.

Plusieurs dispositifs peuvent requérir une demande déport d'un contenu au même dispositif de déport. Cette configuration pose problème car le dispositif de déport peut être occupé lorsqu'il reçoit une requête de déport ; en effet, le dispositif de déport peut être en cours de restitution d'un premier contenu pour le compte d'un premier dispositif de commande MOB1 ; dans ce cas, un module de gestion gère les demandes d'accès au dispositif de déport selon la façon décrite ci-dessous.

Selon l'invention, le procédé comprend les étapes :
- une étape de restitution du premier contenu CNT1 via le dispositif de déport ; ce premier contenu étant restitué pour le compte du premier dispositif mobile MOB1 ;
- pendant la restitution du premier contenu CNT1, le dispositif de déport reçoit une demande de déport, depuis le deuxième dispositif mobile MOB2, d'un deuxième contenu ;
- une étape de transmission d'une information à destination du dispositif de commande, l'information étant représentative d'une durée d'attente pour le déport du deuxième contenu.

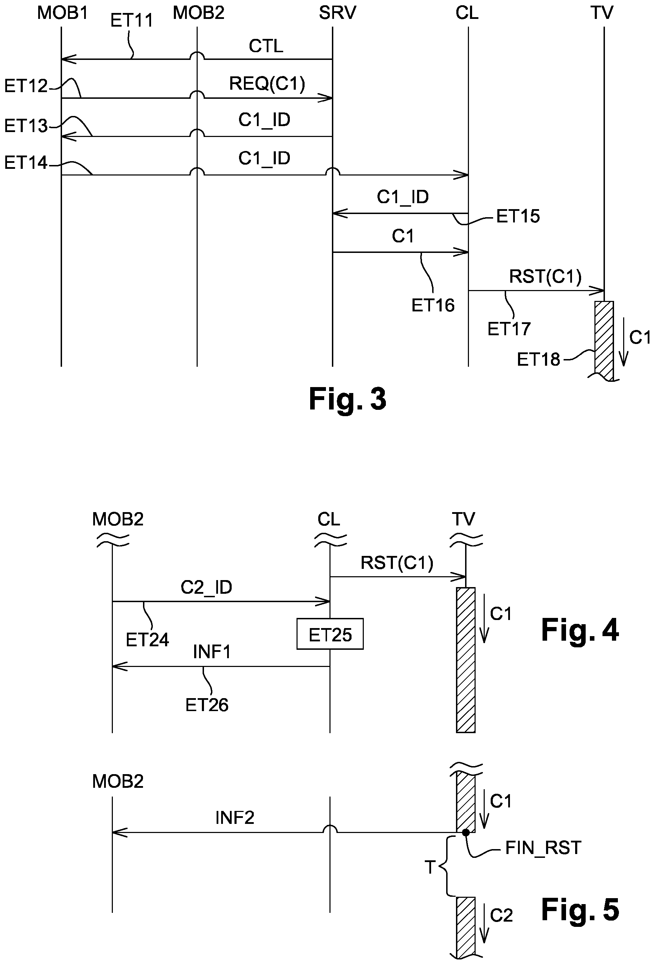

Afin d'illustrer le principe de l'invention, un exemple de réalisation va maintenant être décrit en référence aux figures 3 et 4.

Dans cet exemple, on suppose que le réseau domestique comprend deux dispositifs mobiles MOB1 et MOB2, le premier étant à l'origine de la de demande restitution du premier contenu CNT1 et le second dispositif mobile MOB2 qui va requérir une restitution d'un deuxième contenu CNT2 pendant la restitution du premier contenu CNT1 sur le a télévision TV.

Deux phases vont être décrites en référence aux deux figures 3 et 4 respectivement.

La première phase PH1 est consacrée à une demande de restitution issue du premier dispositif mobile MOB1. Lors de cette première phase, on suppose que le dispositif de déport est disponible pour réaliser un déport et donc recevoir une requête d'accès à un contenu.

La deuxième phase PH2 est consacrée à une réception d'une demande de déport par le dispositif de déport, issue du deuxième dispositif mobile MOB2, simultanément à la restitution du premier contenu.

La première phase PH1 comprend plusieurs étapes référencées ET1n.

Lors d'une première étape ET11, un utilisateur accède à un catalogue CTL de contenus audiovisuels sur le serveur SRV. Dans ce catalogue, l'utilisateur sélectionne, par le biais du premier dispositif mobile MOB1, un contenu C1_ID, par exemple une vidéo.

Lors d'une deuxième étape ET12, une requête d'accès au contenu C1 REQ(C1) est émise depuis le premier dispositif mobile MOB1 vers le serveur de contenus SRV.

Le serveur répond lors d'une troisième étape ET13 en fournissant l'identifiant du contenu C1_ID commandé au dispositif mobile MOB1.

Lors d'une quatrième étape ET14, le premier dispositif mobile MOB1, reçoit et transmet cet identifiant au dispositif de déport CL.

Lors d'une cinquième étape ET15, le dispositif de déport CL se connecte au serveur de contenu SRV et requiert la réception du contenu ayant l'identifiant C1_ID.

Lors d'une sixième étape ET16, le contenu est reçu par le dispositif de déport et est restitué sur la télévision TV.

Lors d'une septième étape ET17 RST(C1_ID), la clé décode le contenu et requiert la restitution du contenu C1 sur la TV.

La deuxième phase PH2 comprend plusieurs étapes référencées ET2n-Ck (k=1,2). Lors de cette deuxième phase, le deuxième dispositif mobile va requérir la restitution d'un deuxième contenu C2 alors que le dispositif déport est en cours de restitution du premier contenu C1.

Les étapes ET21 à ET23 sont les mêmes que les étapes ET11 à ET13 à la différence que le contenu sélectionné lors de la deuxième étape ET22 est un deuxième contenu C2 en lieu et place du premier contenu C1. On verra néanmoins dans la suite que les contenus C1 et C2 peuvent être les mêmes ; un même film par exemple.

Lors d'une cinquième étape ET24, le deuxième dispositif mobile MOB2 reçoit et transmet l'identifiant C2-ID du deuxième contenu au dispositif de déport CL.

Lors d'une cinquième étape ET25 de cette deuxième phase PH2, le dispositif de déport CL reçoit l'identifiant C2_ID.

Le dispositif de déport étant occupé par la restitution du premier contenu C1, le module de gestion, présent sur le dispositif de déport CL, transmet une information INF1, dite première information, au deuxième dispositif mobile MOB2 lors d'une sixième étape ET26. Cette information donne comme indication une durée d'attente avant la réalisation du déport de demandé.

L'information peut naturellement inclure d'autres informations que la durée telles que par exemple des données relatives au contenu déporté en cours de restitution.

La durée d'attente peut correspondre à la durée restante de restitution du contenu en cours de restitution. Si le premier contenu C1 est un film, la durée restante peut être affichée. La durée restante peut aussi être fournie par un utilisateur visualisant le premier contenu ; en effet, cet utilisateur n'a peut-être pas l'intention de visualiser le premier contenu dans son intégralité ; il peut alors indiquer une durée probable d'utilisation du dispositif de déport CL.

Aussi, la restitution du premier contenu peut être interrompue au cours de sa restitution. Dans cette configuration, l'interruption de la restitution du premier contenu déclenche une transmission d'une deuxième information représentative de l'interruption à destination du dispositif de commande signifiant que le dispositif de déport est disponible. L'interruption peut aussi déclencher la restitution automatique du deuxième contenu.

Selon une variante, la fin de la restitution du premier contenu C1 déclenche automatiquement la restitution du deuxième contenu C2.

De préférence, le démarrage de la restitution du deuxième contenu est temporisée jusqu'à validation par l'utilisateur. En référence à la figure 5, la fin de la restitution du premier contenu est notifié au deuxième dispositif de commande ; pour cela le dispositif de déport transmet une nouvelle information INF2, dite deuxième information, indiquant la fin de la restitution du premier contenu C1 ; le dispositif de déport CL devient donc disponible pour la réalisation d'un nouveau déport. Aussi, la restitution du deuxième contenu C2 peut aussi être temporisée d'une durée T suffisante pour se placer devant l'écran de la télévision TV, la restitution s'effectuant automatiquement à l'expiration de cette durée de temporisation T.

Cette durée de temporisation peut être calculée en prenant en compte la localisation du deuxième dispositif mobile MOB2, ou tout autre dispositif pouvant localiser l'utilisateur souhaitant accéder au deuxième contenu ; cet autre dispositif peut être par exemple une montre connectée.

Il peut arriver que le deuxième contenu corresponde au premier contenu ; ce peut être le même film par exemple. Dans cette configuration, la première information informe que le contenu demandé est en cours de restitution sur le dispositif de déport.

Selon une autre variante, l'étape de transmission est suivie d'une mise en fil d'attente de l'identifiant du dispositif à l'origine de la demande déport. Si plusieurs autres dispositifs mobiles requièrent un accès, une liste d'attente est créée en conséquence.

Selon un autre mode de réalisation, lorsque plusieurs demandes de déport sont reçues par le dispositif de déport, une liste d'attente d'identifiants de dispositifs de commande est créée.

Selon une variante de ce mode, à chaque identifiant de dispositif de commande correspond une durée restante.

Selon une autre variante de ce mode, l'information est complétée par une demande de validation ; lorsque la demande est validée, l'identifiant du dispositif mobile concerné est ajouté dans la liste d'attente et une réservation de déport est faite pour ce dispositif de commande. La réservation ainsi faite est communiquée au dispositif de commande et/ou au dispositif de déport. Si la validation n'est pas faite, l'identifiant du dispositif concerné n'est pas inclus dans la liste d'attente.

A noter enfin que, pour la réalisation du procédé de l'invention, un dispositif de déport comprend les modules suivants:
- un module de restitution d'un premier contenu commandé par un premier dispositif de commande ;
- un module de réception, au cours de la restitution, d'une demande de déport, depuis un deuxième dispositif de commande, d'un deuxième contenu,
- un module de transmission apte à transmettre à destination du deuxième dispositif de commande une information représentative d'une durée d'attente pour le déport du deuxième contenu.

Précisons ici que le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

## Revendications

1. Procédé de gestion du déport de la restitution d'un contenu sur un dispositif de déport apte à être commandé par plusieurs dispositifs de commande (MOB1, MOB2), **caractérisé en ce qu'**il comprend
a. une étape de déport de la restitution (ET18) d'un premier contenu (C1) commandé par un premier dispositif de commande (MOB1);
b. une étape de réception (ET24), au cours de la restitution, d'une demande de déport d'un deuxième contenu (C2) issue d'un deuxième dispositif de commande (MOB2),
c. une étape de transmission (ET26) à destination du deuxième dispositif de commande d'une information (INF1) représentative d'une durée d'attente pour le déport du deuxième contenu.

2. Procédé de gestion selon la revendication 1, **caractérisé en ce qu'**une interruption, par le premier dispositif, du déport de la restitution du premier contenu au cours de sa restitution, déclenche le déport de la restitution du deuxième contenu.

3. Procédé de gestion selon la revendication 2, **caractérisé en ce que** le déclenchement du déport de la restitution du deuxième contenu est temporisé (T).

4. Procédé de gestion selon la revendication 1, **caractérisé en ce que** lorsque le premier contenu et le deuxième contenu sont les mêmes, l'information (INF1) indique en outre que le contenu demandé est déjà en cours de restitution.

5. Procédé selon la revendication 1, **caractérisé en ce que** lorsque plusieurs demandes de déport sont reçues, une liste d'attente d'identifiants de dispositifs de commande est créée.

6. Procédé selon la revendication 1 ou 5, **caractérisée en ce que** l'information (INF1) est complétée par une demande de validation, **en ce que** le dispositif de commande est ajouté à la liste d'attente seulement après validation.

7. Dispositif de déport (CL1-CL3) apte à accéder à un contenu stocké sur un serveur de contenus (SRV), le déport de la restitution d'un contenu sur un dispositif de déport étant apte à être commandé par plusieurs dispositifs de commande, **caractérisé en ce qu'**il comprend
a. un module de déport de la restitution d'un premier contenu commandé par un premier dispositif de commande ;
b. un module de réception, au cours de la restitution, d'une demande de déport d'un deuxième contenu issue d'un deuxième dispositif de commande,
c. un module de transmission apte à transmettre à destination du deuxième dispositif de commande une information représentative d'une durée d'attente pour le déport du deuxième contenu.

8. Programme d'ordinateur apte à être mis en oeuvre sur un dispositif tel que défini dans la revendication 7, le programme comprenant des instructions de code qui, lorsqu'il est exécuté par un processeur, réalise les étapes du procédé définies dans la revendication 1.
